# EUROPEAN PATENT APPLICATION

(11) **EP 0 546 792 A1**
(43) Date of publication of application: **16.06.1993**
(21) Application number: 92311153.8
(22) Date of filing: 08.12.1992
(51) Int. Cl.: B32B 3/10, B32B 15/08, B65D 65/40

(54) **Laminate useful as packaging material and its manufacture**

(30) Priority: 11.12.1991 IL 100325
(71) Applicant: Geller, Avner, Tel-Aviv 69694 (IL)
(72) Inventor: Geller, Avner, Tel-Aviv 69694 (IL)
(74) Representative: Barlow, Roy James

(57) **Abstract**

A laminate, being a flexible multi-layer film useful as a packaging material of the kind being essentially non-transparent and having transparent windows which are formed as an ornamental element in the pattern printed on the laminate is provided. Such a laminate allows to view the content of a packaging made of this laminate.

## Description

### FIELD OF THE INVENTION

The invention concerns a process for the manufacture of a multi-layer flexible film (to be referred to herein as *"laminate"*) useful as a packaging material for food, medicines and the like, which is essentially non-transparent but has windows therein allowing to view the contents of a package formed thereby.

The invention further concerns a laminate which can be prepared by this process.

### BACKGROUND OF THE INVENTION AND PRIOR ART

Laminates are commonly used in packaging of food products, medical and pharmaceutical products, electronic products and others. Laminates which are essentially non-transparent gained considerable popularity for a large number of applications owing to their aesthetic and other properties. Such laminates generally comprise one layer made of a film of a non-transparent material such as aluminum foil, metalized polymer film, paper and the like, (to be referred to hereinafter as *"non-transparent film"*) and at least one layer, preferably two layers covering both faces of the non-transparent film, made of a film of an essentially transparent material such as polyethylene, polypropylene, polyester and the like (to be referred to hereinafter as *"transparent film"*).

It is very often desired to present the product contained in a package through a transparent window in the packaging material. U.S. Patents 2,158,755 (to Hodgdon *et. al*) and 2,577,249 (to Janett) disclosed various packagings made of laminates having transparent and non-transparent portions, the transparent portions being arranged in the form of strips or polygonal or rounded windows, and processes for their manufacture. However, none of the laminates disclosed in these references are suitable for use in modem packagings and the processes disclosed there are generally unsuitable for modem laminate preparation techniques.

### OBJECTS OF THE INVENTION

It is the object of the invention to provide a novel laminate of the kind being essentially non-transparent and having transparent windows, and particularly such in which said windows form an integral ornamental element in a pattern printed on the laminate.

It is a further object of the present invention to provide a novel process for preparing a laminate useful as a packaging material for food products and the like made of an essentially non-transparent material and having transparent windows, and particularly such in which said windows are formed as an integral ornamental element in a pattern printed on the laminate.

These objects as well as other objects of the invention will be elucidated from the following description of the invention.

### SUMMARY OF THE INVENTION

The present invention provides a laminate, useful as a packaging material being essentially non-transparent and having one or more transparent windows, said laminate being characterized in that it comprises one layer made of an essentially non-transparent material and being perforated by holes having a shape corresponding to that of said windows and one or more layers made of an essentially transparent material, said windows form integral ornamental elements in a pattern printed on said laminate.

The present invention further provides a process for the manufacture of a laminate useful as a packaging material, being essentially non-transparent and having one or more transparent windows, the process comprising printing a pattern on either a transparent or a non-transparent film, perforating the non-transparent film and then attaching the transparent film to the non-transparent film, whereby an essentially a non-transparent laminate having transparent windows is formed, the windows are being formed so that they form an integral or laminate element in the printed pattern.

The non-transparent film used may be any one of those already mentioned above, namely, aluminum foil, paper, metalized polymer film etc. Furthermore, the non-transparent film may by itself be a multilayer film in which one or more layers are made of a non-transparent material such as those mentioned above. The transparent film may be selected from any one of those known in the art such as polyethylene, polypropylene, multi-layer transparent films and the like and the attachment thereof to said non-transparent film may be by gluing, heat treatment, extrusion, etc.

Providing a print in a laminate may be performed by any one of a number of processes well-known in the art such as rotogravure, and lexography or others. A detailed description of such printing processes goes beyond the scope of the present writing but the artisan is no doubt familiar with such processes. As is also generally known, while printing may in principle be on an external face of the laminate, it is preferred that the print will be situated between two layers of the laminate, i.e., applied onto a face of a film which in the laminate faces another film. The printing may thus preferably be on the non-transparent film or may be on one of the transparent films on a face thereof which is attached to the non-transparent film.

The windows are formed in proper register with the print. Where the print is on one of the transparent films, the attachment of the transparent and the non-transparent films should be made accurate so that the print and the windows will be in proper register.

In order to ensure that the windows and the print are in such register, the printed pattern is preferably formed on the non-transparent film. Printing may be prior to forming the holes or subsequent thereto, the former sequence being generally preferred. Printing on a film generally includes also printing of a small synchronization mark (of the kind used at a later processing stage for cutting the packaging materials in appropriate places to form unit packages) which synchronization mark may then be used as a signal for forming the window at the appropriate location.

Forming the widows, the printing and the attachment of the different films to form the laminate of the invention may be carried out in one continuous process on a single machine or may be performed in discrete steps each on a separate dedicated machine capable of performing one or more of these functions.

The process of the invention may be performed on a machine of the kind used in the art for the manufacture of laminates which had however been modified by adding a unit capable of forming the holes in the non-transparent film prior to its attachment to the transparent films. Such a unit may for example be a hole punching unit comprising several punchers each one having a puncher member of a shape corresponding to that of the hole and situated on an arm which is capable of rapid movement in a direction essentially normal to the plain of the non-transparent film thereby punching a hole in said film.

As another example, said unit may consist of a pair of two essentially tangential rolls one of which has projections of a shape corresponding to the shape of the holes and the other one of said pair has recesses of essentially the same shape, said projections having sharp edges whereby during engagement of one of said projections with one of said recesses while there is a film between them, a hole is cut out in said film.

As a further example, said unit may be a laser-based cutting unit of a kind used in various industrial process such as cutting of yarns etc.

### BRIEF DESCRIPTION OF THE DRAWINGS

The present invention will now be illustrated by reference to some non-limiting specific embodiments depicted in the annexed drawings.
**Fig. 1** is a perspective view depicting the manufacture of a two-layer laminate in accordance with one embodiment of the invention;
**Fig. 2** is a schematic side view of the embodiment of Fig. 1;
**Fig. 3** is a schematic side view of the manufacture of a three-layer laminate in accordance with another embodiment of the invention;
**Fig. 4** is a schematic side view of the manufacture of a three-layer laminate in accordance with a another embodiment of the invention;
**Fig. 5** is a schematic cross-section through a film manufactured in accordance with the embodiment of Fig. 1 at several manufacturing stages; and
**Fig. 6** is a schematic cross-section through a film manufactured in accordance with the embodiment of Figs. 3 and 4.

### DESCRIPTION OF SPECIFIC EMBODIMENTS

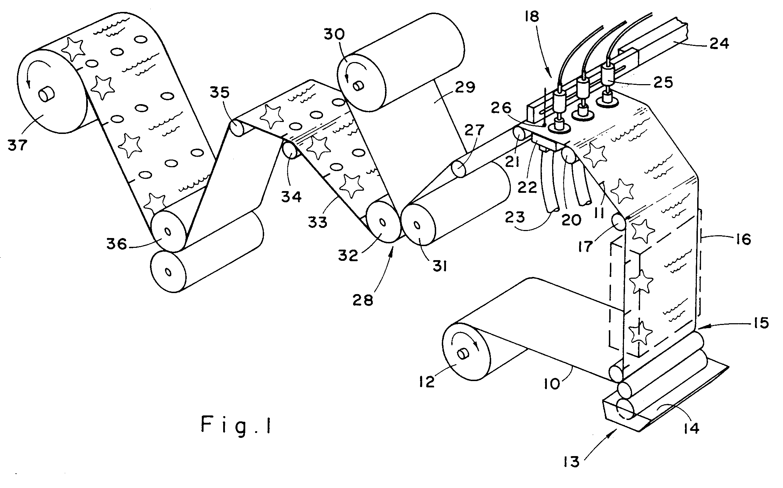

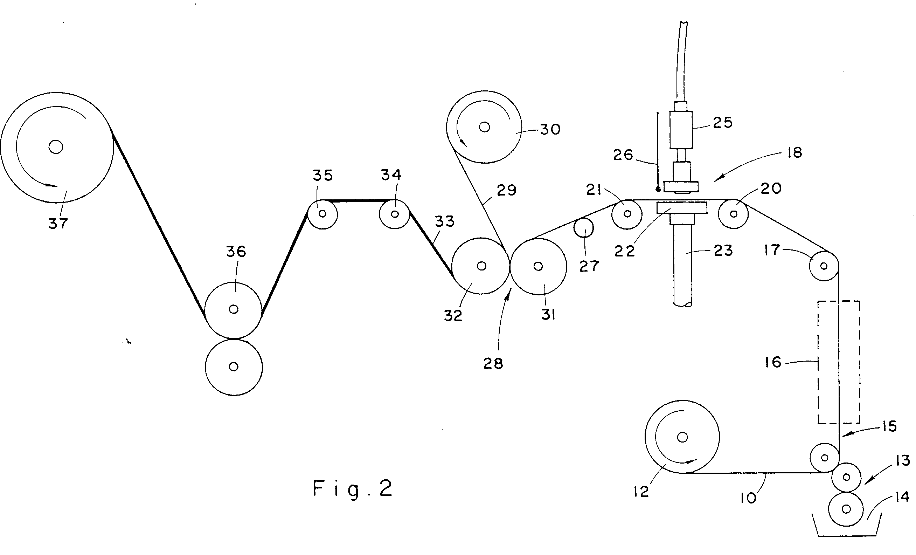

Attention is first directed to Figs. 1and 2 which depict schematically the manufacture of a two-layer laminate in accordance with one embodiment of the invention. A pre-printed non-transparent film **10** is released from a first unwind roller **12** and advances to adhesive coating assembly **13** which applies a thin layer of a liquid adhesive substance from reservoir **14** onto face **15** of film **10**. From coating assembly **13** film **10** advances through drying oven **16** in which the adhesive coating is dried to some degree, then over roller **17** to punching assembly **18**. Punching assembly **18** comprises two guiding rollers **20** and **21**, a punching base and waste removing unit **22** linked to vacuum pipes **23**, a support arm **24** holding three punching units **25** and an optical sensor **26**. The print on the non-transparent film **10** comprises also synchronization marks **11** which are detected by optical sensor **26** upon which the punching operation of punching units **25** is initiated and consequently holes are formed in film **10**. The punching operation is performed against base **22** and the cut-out waste is evacuated by means of vacuum pipes **23**.

After the film is punched it advances over roller **27** to attachment roller assembly **28** where non-transparent film **10** is attached to transparent film **29** supplied from a second unwind roller **30**. The attachment of transparent film **29** to the non-transparent film **10** is by pressing the two films to one another by means of rollers **31** and **32** and heating by the latter roller as known per se. The resulting two-layer laminate **33** is then advanced over rollers **34** and **35** under tension roller **36** and then to laminate wind-up roller **37**.

According to the embodiment of Figs. 1 and 2, the adhesive coated cut out waste is evacuated through the vacuum pipes **23**. This at times may cause difficulties owing to sticking of the cut outs to the inner walls and clogging of the vacuum pipes. To overcome this problem, according to a modification of the embodiment of Figs. 1 and 2, the rotogravure process known per se is used so that the adhesive coating is applied in register only to those areas of the laminate which will not be punched out.

In accordance with a further embodiment, the adhesive coating is applied after the hole formation.

In the embodiment of Figs. 1 and 2, the adhesive substance is applied prior to punching the film **10**. It may at times be desired to apply the adhesive substance after punching. For this purpose, in accordance with a modification of the embodiment of Figs. 1 and 2, an adhesive coating assembly **13** is installed between the punching assembly **18** and the attachment roller assembly **28**.

In applying the adhesive substance after punching the film **10**, care should be taken not to apply the adhesive substance over the punched holes as this may cause smearing of the liquid adhesive through the holes. here again the rotogravure process may be used, whereby the adhesive substance is applied only on the non-punched areas of the film **10**.

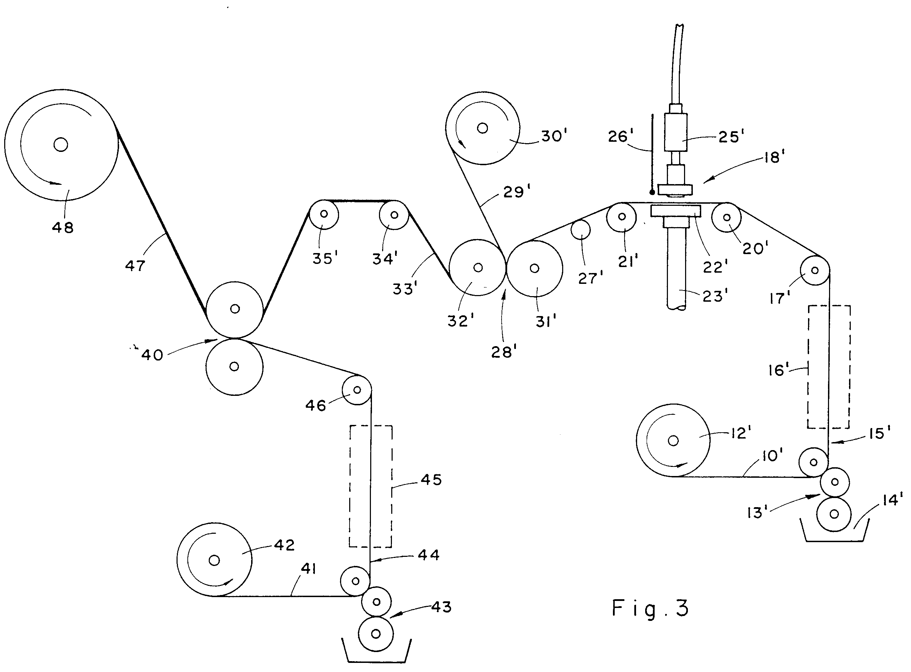

Attention is now directed to Fig. 3 which depicts schematically the manufacture of a three-layer laminate in accordance with another embodiment of the invention. various manufacturing stages are the same as those of the embodiment of Figs. 1 and 2 and accordingly like elements were given the same reference numerals as the corresponding elements in Figs. 1 and 2 with a prime indication, and the reader is referred to the description of these previous figures for an explanation of the function of these elements. After advancing over rollers **34'** and **35'** the two-layer laminate **33'** advances to attachment roller assembly **40.** Transparent film **41** is released from a third unwind roller **42** advances to adhesive coating assembly **43** in which an adhesive layer is applied onto surface **44** of film **41** in a similar manner to that of coating assembly **13'**, then advances through drying oven **45** over roller **46** and to roller assembly **40**. Transparent film **41** is attached to the two-layer laminate **33'** in a similar manner to the attachment in attachment roller assembly **28'** and the resulting three-layer laminate **47** is then wound on wind-up roller **48'**.

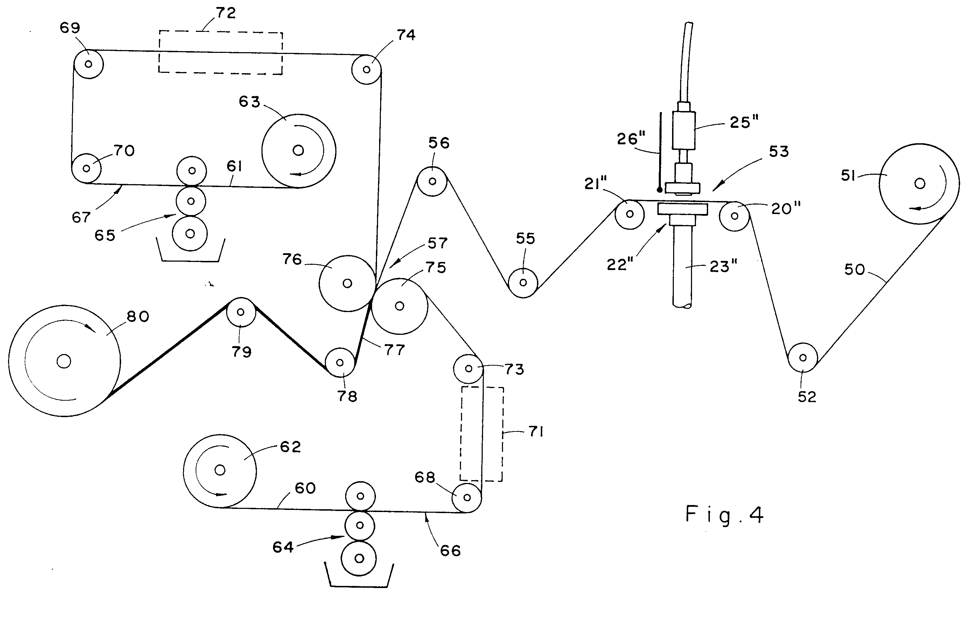

Attention is now directed to Fig. 4 depicting the manufacture of a three-layer laminate in accordance with a further embodiment of the invention. A pre-printed non-transparent film **50** is released from a first unwind roller **51** and advances under tension roller **52** to punching assembly **53**. Punching assembly **53** performs essentially the same function as punching assembly **18** in the embodiment of Fig. 1 and accordingly all its elements were given the same reference numerals with a double prime indication and the reader is referred to the above description for an explanation on the functions of these elements and their manner of operation. It should, however, be noted that the non-transparent film in punching assembly **53** has no adhesive layer applied thereon and any complications which can arise from such an adhesive layer are thus avoided. From punching assembly **53** film **50** with the punched holes advance under roller **55** and over roller **56** to attachment roller assembly **57**.

The transparent films **60** and **61** are released from second **62** and third **63** unwind rollers, then advance through adhesive coating assemblies **64** and **65** which apply a thin adhesive layer on the respective faces **66** and **67**. The films then advance around rollers **68** and **69**, respectively, and then through respective drying ovens **71** and **72** and over respective rollers **73** and **74** to attachment roller assembly **57**. In attachment roller **57** the three films are attached to one another owing to the pressure applied by the two rollers **75** and **76**. Then the three-layer laminate **77** advances under roller **78**, over roller **79** and to laminate wind-up roller **80**.

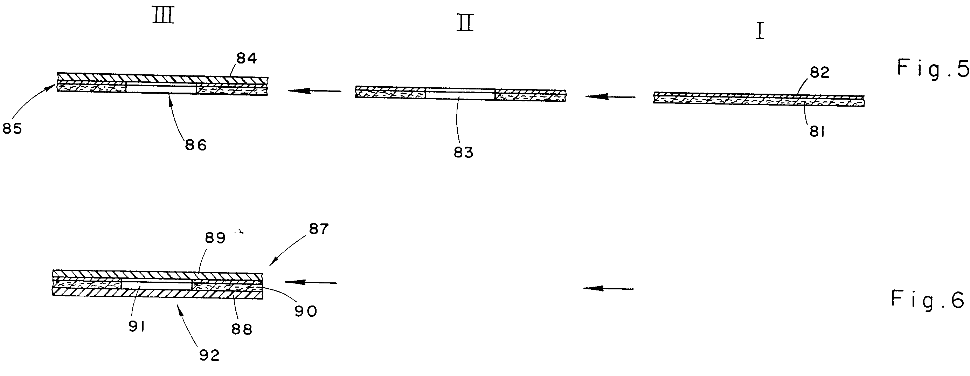

Attention is now made to Fig. 5 depicting a schematical cross-sectional representation of a laminate manufactured in accordance with the embodiment shown in Figs. 1 and 2, in three different manufacturing stages. The non-transparent film **81** shown under I has an image printed thereon which is shown schematically by a thin layer **82**. After the film passes through the punching unit a hole **83** is formed as shown under II and after attachment of a transparent layer **84**, as shown under III, a two-layer laminate **85** having essentially transparent windows **86** is formed.

Attention is now directed to Fig. 6 which is a schematical cross-section through a laminate obtained in accordance with the embodiment shown in Figs. 3 and 4. The stages which correspond to I and II in Fig. 5 are essentially identical. The laminate **87** which is obtained in accordance with these embodiments consist of three layers, a first **88** and a second **89** transparent layer and a non-transparent layer **90** having openings **91** and consequently film **87** is essentially non-transparent having essentially transparent windows **92**.

## Claims

1. A laminate, useful as a packaging material being essentially non-transparent and having one or more transparent windows, said laminate being characterized in that it comprises one layer made of an essentially non-transparent material and being perforated by holes having a shape corresponding to that of said windows and one or more layers made of an essentially transparent material, said windows form integral ornamental elements in a pattern printed on said laminate.

2. A process for the manufacture of a laminate useful as a packaging material, being essentially non-transparent and having one or more transparent windows, the process comprising printing a pattern on either a transparent or a non-transparent film, perforating the non-transparent film and then attaching the transparent film to the non-transparent film, whereby an essentially a non-transparent laminate having transparent windows is formed, the windows are being formed so that they form an integral or laminate element in the printed pattern.

3. A process according to Claim 2, wherein the holes are formed in the non-transparent material by punching.

4. A process according to Claim 3, wherein the print is applied on the non-transparent material, said print comprising a synchronization mark for triggering the punching of holes by the punching unit.
